(19) Europäisches Patentamt
European Patent Office
Office européen des brevets

(11) EP 4 790 631 A1

(12) EUROPEAN PATENT APPLICATION
published in accordance with Art. 153(4) EPC

(43) Date of publication:
**12.08.2026 Bulletin 2026/33**

(21) Application number: **23954744.1**

(22) Date of filing: **04.10.2023**

(51) International Patent Classification (IPC):
***G06Q 50/06*** *(2024.01)* ***G06Q 10/00*** *(2026.01)*

(52) Cooperative Patent Classification (CPC):
**G06Q 10/00; G06Q 50/06**

(86) International application number:
**PCT/JP2023/036170**

(87) International publication number:
**WO 2025/074532 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi GE Vernova Nuclear Energy, Ltd.**
**Hitachi-shi, Ibaraki 317-0073 (JP)**

(72) Inventors:
- **HOSOKAWA, Yuuji**
  **Hitachi-shi, Ibaraki 317-0073 (JP)**
- **KANEDA, Junya**
  **Hitachi-shi, Ibaraki 317-0073 (JP)**

(74) Representative: **MERH-IP Matias Erny Reichl Hoffmann**
**Patentanwälte PartG mbB**
**Paul-Heyse-Straße 29**
**80336 München (DE)**

# (54) OPTIMAL OPERATIONS ANALYSIS DEVICE, OPTIMAL OPERATIONS ANALYSIS SYSTEM, AND OPTIMAL OPERATIONS ANALYSIS METHOD

(57) The optimal operations analysis device (100) of the present invention includes: a parameter setter/modifier (104) configured to set combinations of a baseload operation ratio, which is a ratio occupied by a first capacity used for generating wholesale power within a facility capacity of a power generation plant, and an adjustment coefficient, which is a ratio occupied by a second capacity that is actually in a state capable of generating adjustment power within the capacity obtained by subtracting the first capacity from the facility capacity; a total profit calculator (109) configured to calculate total profit corresponding to each of the combinations based on revenue from selling the wholesale power, revenue from selling the adjustment power, and the power generation cost; and an outputter (111) configured to output the relationship between the combinations and the total profit, and the combinations that increase the total profit to a degree that satisfies a predetermined criteria.

[FIG. 1]

1
100
OPTIMAL OPERATIONS ANALYSIS DEVICE
101
INPUTTER
102
PRICE-DATA ACQUIRER
103
FACILITY-CAPACITY ACQUIRER
104
PARAMETER SETTER/MODIFIER
105
POWER GENERATION AMOUNT CALCULATOR
106
UTILIZATION RATE CALCULATOR
107
GENERATED-POWER REVENUE CALCULATOR
108
POWER GENERATION COST CALCULATOR
109
TOTAL PROFIT CALCULATOR
110
PROFIT STORAGE
111
OUTPUTTER
200
MONITOR/NUCLEAR POWER GENERATION PLANT CONTROLLER
201
OUTPUT DISPLAY
202
CONTROL INSTRUCTOR



Processed by Luminess, 75001 PARIS (FR)

## Description

### Technical Field

The present invention relates to an optimal operations analysis device, an optimal operations analysis system, and an optimal operations analysis method.

### Background Art

In recent years, in nuclear power generation plants, safety countermeasure construction has been underway to further improve safety and reliability, and enormous investment has been made. In addition, in the coming era when renewable energy will be introduced in large quantities, there may be situations where output adjustment operation is expected, resulting in concerns about the deterioration of the economic efficiency of nuclear power generation plants.

Meanwhile, at present, nuclear power generation plants operate at a constant output as baseload power sources. The electricity generated is stably traded through bilateral contracts, wholesale power markets, and the like. However, further improvement in economic efficiency is difficult under the current circumstances. As a technology to improve economic efficiency in the operation of power generation plants, Patent Literature 1 is known.

Patent Literature 1 describes "obtaining a flexible baseload map including: a primary baseload operation space for operating a power generation plant so as to satisfy baseload power demand in order to achieve a target plant power output and a target plant power generation efficiency; and an extended baseload portion for achieving an efficiency that becomes lower than an optimal plant power generation efficiency even while plant power output increases (summarized)."

### Prior Art

### Patent Literature

Patent Literature 1: Japanese Patent Application Publication No. 2022-171573

### Summary of the Invention

### Problems to be Solved by the Invention

In Patent Literature 1, it is described that the power generation plant is operated based on "optimal operating conditions of the power generation plant that satisfy the baseload power demand with revenues maximized based on the materialization of market conditions, for each of a plurality of visualized representations of revenue associated with each operating segment in a subdivided flexible baseload map, for each of a plurality of market conditions (paragraph 0115)." However, a specific method for determining optimal operating conditions is not envisioned. Therefore, a person skilled in the art must appropriately determine specific optimal operating conditions.

Accordingly, the purpose of the present invention is to specifically determine optimal operating conditions for a power generation plant during output adjustment operation. More specifically, the present invention aims to display the relationship between the baseload operation ratio (details described later) and profit during output adjustment operation in a nuclear power generation plant, and furthermore, determine the economically optimal allocation ratio between the baseload portion and the adjustment power supply portion (that is, the optimal baseload operation ratio).

### Means for Solving the Problems

The optimal operations analysis device of the present invention comprises: a parameter setter/modifier configured to set combinations of a baseload operation ratio, which is a ratio occupied by a first capacity used to generate wholesale power within the facility capacity of a power generation plant, and an adjustment coefficient, which is a ratio occupied by a second capacity that is actually in a state capable of generating adjustment power within the capacity obtained by subtracting the first capacity from the facility capacity; a power generation amount calculator configured to calculate the power generation amount of wholesale power and the power generation amount of adjustment power based on the facility capacity and the combinations; a utilization rate calculator configured to calculate a facility utilization rate of the power generation plant based on the combinations; a generated-power revenue calculator configured to calculate revenue from selling wholesale power and revenue from selling adjustment power from price data, the power generation amount of wholesale power, and the power generation amount of adjustment power; a power generation cost calculator configured to calculate the power generation cost of the power generation plant based on the facility utilization rate; a total profit calculator configured to calculate total profit corresponding to each of the combinations based on the revenue from

selling wholesale power, the revenue from selling adjustment power, and the power generation cost; and an outputter configured to output the relationship between the combinations and the total profit, and combinations that increase the total profit to a degree that satisfies a predetermined criterion.

Other means will be described in the embodiments of the invention.

Effects of the Invention

According to the present invention, it is possible to specifically determine optimal operating conditions for a power generation plant during output adjustment operation.

Brief Description of Drawings

[FIG. 1] A functional block diagram of an optimal operations analysis system.
[FIG. 2] A flowchart illustrating the processing procedure of an optimal operations analysis device.
[FIG. 3] An example of optimal operations evaluation results.
[FIG. 4] A hardware configuration diagram of an optimal operations analysis device.

Embodiments of the Invention

Hereinafter, embodiments of the present invention (hereinafter referred to as "the present embodiment") will be described in detail using the drawings. While the present embodiment refers to an example of a nuclear power generation plant, the present invention can be generally applied to power generation plants other than nuclear power generation plants.

(Basic Concept)

There exist wholesale power markets and supply-demand adjustment markets as electric power markets. In the wholesale power market, electrical energy for future time slots is traded. The content of such trading is, for example, "purchase (sale) of ◎ kWh of electricity at ○ yen/kWh during a certain 30-minute period early the next morning." Such electricity is referred to as "wholesale power," and "○ yen/kWh" is referred to as the wholesale power market price. Once a transaction is concluded in the market (exchange), it must be executed. In other words, a power supplier can plan and operate the nuclear power generation plant to meet such transactions.

In the supply-demand adjustment market, the right to buy and sell electricity urgently in future time slots is traded. The content of the transaction is "purchase (sale) of the right to purchase (sell) ◎ kWh of electricity at ○ yen/kWh within 15 minutes when an instruction is issued, for ○○ yen/kWh." Such electricity traded due to sudden climate changes, etc. is generally called "adjustment power," and "○○ yen/kWh" is called the adjustment power market price. Even if such a transaction is concluded in the market, it is merely the trading of a right (option), and there is no guarantee that the actual electricity transaction will occur. For power consumers, adjustment power is any kind of insurance.

Therefore, a power supplier divides the facility capacity (kW) of its nuclear power generation plant into two parts: the capacity for operating at a constant output to generate wholesale power, referred to as the "first capacity"; and the remaining capacity, obtained by subtracting the first capacity from the facility capacity, which is secured (in some cases operated) for generating adjustment power. This operating mode is referred to as "output adjustment operation." When the power supplier sets a high ratio for the first capacity while expecting no sudden climate changes, it loses opportunities for profit if sudden climate changes occur; conversely, if the ratio of the first capacity is set too low, in the worst case, profit may be lost entirely.

Thus, a baseload operation ratio (between 0 and 1) is defined as follows:

- $$\text{Baseload operation ratio} = \text{first capacity for generating wholesale power} / \text{facility capacity}$$

The capacity obtained by subtracting the first capacity from the facility capacity may, as a result, be used for generating adjustment power or may not be used for generation. Note that a portion of the capacity obtained by subtracting the first capacity from the facility capacity may be unable to actually operate due to technical constraints. Therefore, the capacity that is actually in a state capable of generating adjustment power within the capacity obtained by subtracting the

first capacity from the facility capacity is referred to as the "second capacity." Then, an adjustment coefficient (between 0 and 1) is defined as follows:

- The adjustment coefficient = second capacity that is actually in a state capable of generating adjustment power / capacity obtained by subtracting the first capacity from the facility capacity

(Optimal Operations Analysis System)

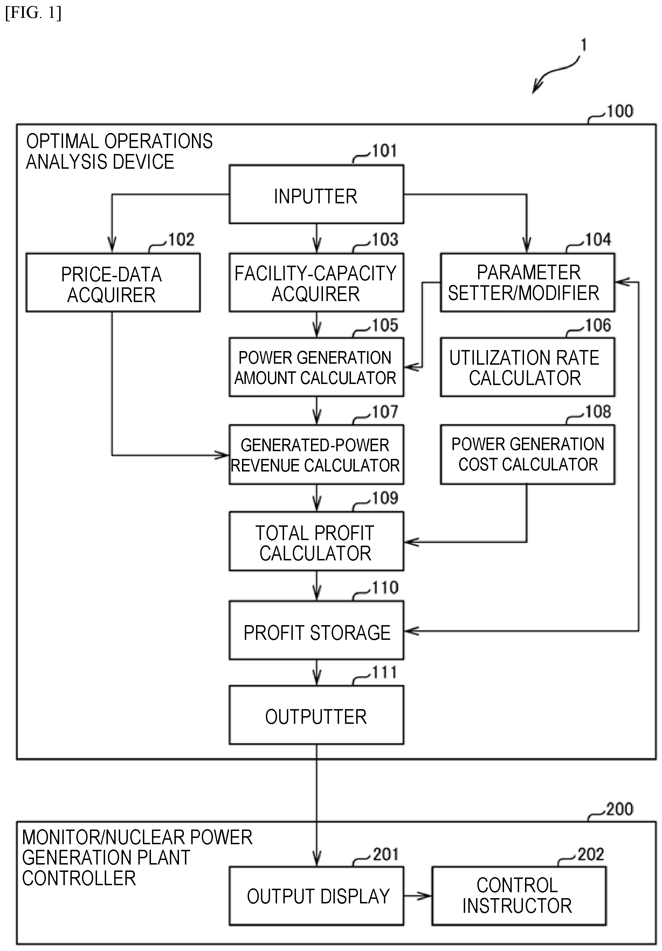

FIG. 1 is a functional block diagram of the optimal operations analysis system. The optimal operations analysis system 1 outputs proposal information that proposes, for a nuclear power generation plant, the baseload operation ratio, etc., during output adjustment operation. Specifically, the optimal operations analysis system 1 creates proposal information based on an assumed wholesale power market price, an assumed adjustment power market price, the facility capacity, and the adjustment coefficient.

The optimal operations analysis system 1 includes an optimal operations analysis device 100 and a monitor/-nuclear power generation plant controller (monitor/power generation plant controller) 200.

(Hardware Configuration of the Optimal Operations Analysis Device)

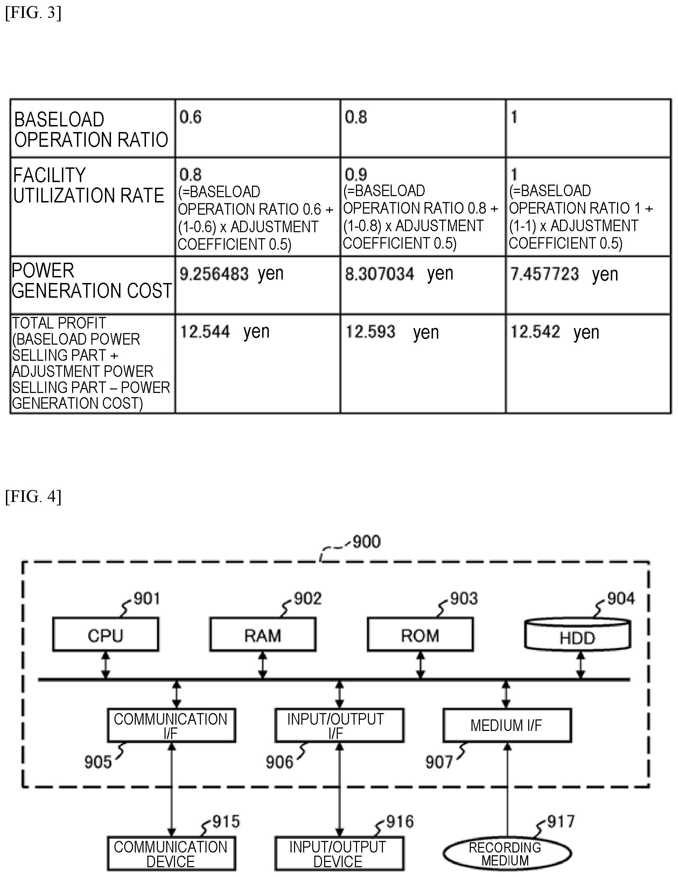

The optimal operations analysis device 100 is a general-purpose computer and includes, as hardware, a central processing unit, an input device, an output device, a main storage device, an auxiliary storage device, and a communication device (details in FIG. 4 below). By the central processing unit reading into the main storage device the software programs stored in advance in the auxiliary storage device, the processing described in each program is realized as the functions of the optimal operations analysis device 100. These matters apply similarly to the monitor/power generation plant controller 200 described later.

(Software Configuration of the Optimal Operations Analysis Device)

The optimal operations analysis device 100 includes an inputter 101, a price-data acquirer 102, a Facility-capacity acquirer 103, a parameter setter/modifier 104, a power generation amount calculator 105, a utilization rate calculator 106, a generated-power revenue calculator 107, a power generation cost calculator 108, a total profit calculator 109, a profit storage 110, and an outputter 111. These are realized by the above-mentioned programs.

The inputter 101 receives input of price data and information related to the nuclear power generation plant that is the subject of analysis. The price data includes the assumed wholesale power market price (yen/kWh) and the assumed adjustment power market price (yen/kWh). The information related to the nuclear power generation plant includes the facility capacity (kW), the adjustment coefficient, and the like. The inputter 101 may receive a plurality of arbitrary values as the adjustment coefficient.

The price-data acquirer 102 acquires, from the inputter 101, the assumed wholesale power market price (yen/kWh) and the assumed adjustment power market price (yen/kWh).

The Facility-capacity acquirer 103 acquires the facility capacity from the inputter 101.

The parameter setter/modifier 104 sets or modifies the baseload operation ratio and the adjustment coefficient as parameters. The parameter setter/modifier 104 acquires the adjustment coefficient from the inputter 101. The parameter setter/modifier 104 sets (generates) an arbitrary value as the baseload operation ratio.

The power generation amount calculator 105 calculates the power generation amount (kWh) of wholesale power and the power generation amount (kWh) of adjustment power based on the facility capacity acquired from the Facility-capacity acquirer 103 and the baseload operation ratio and adjustment coefficient acquired from the parameter setter/modifier 104.

The utilization rate calculator 106 calculates the facility utilization rate of the nuclear power generation plant based on the baseload operation ratio and the adjustment coefficient acquired from the parameter setter/modifier 104.

The generated-power revenue calculator 107 acquires the price data from the price-data acquirer 102 and acquires the power generation amount of wholesale power (kWh) and the power generation amount of adjustment power (kWh) from the power generation amount calculator 105. Then, based on the acquired information, the generated-power revenue calculator 107 calculates revenue (yen) from selling wholesale power and revenue (yen) from selling adjustment power.

The power generation cost calculator 108 calculates the power generation cost (yen) based on the facility utilization rate acquired from the utilization rate calculator 106. The power generation cost includes expenditures such as fuel costs, equipment maintenance costs, and facility operation costs.

The total profit calculator 109 acquires revenue from selling wholesale power and revenue from selling

adjustment power from the generated-power revenue calculator 107, acquires power generation cost from the power generation cost calculator 108, and calculates total profit (yen) as the difference between the sum of both revenues and the power generation cost.

The profit storage 110 stores, in the auxiliary storage device, the total profit acquired from the total profit calculator 109 and the combinations of parameters (baseload operation ratio and adjustment coefficient) acquired from the parameter setter/modifier 104, and gives an instruction command to the parameter setter/modifier 104 to change the parameters.

The outputter 111 outputs the relationship between the total profit stored by the profit storage 110 and the parameters, and the parameter values that increase the total profit to a degree that satisfies a predetermined criterion.

(Monitor/Nuclear Power generation plant controller)

The monitor/nuclear power generation plant controller 200 displays the results calculated by the optimal operations analysis device 100 and, based on the calculated results, issues control instructions to the nuclear power generation plant. The monitor/nuclear power generation plant controller 200 includes an output display 201 and a control instructor 202. These are also realized by the programs mentioned above.

The output display 201 outputs, as proposal information, the relationship between total profit and parameters output by the optimal operations analysis device 100, and the parameter values that increase the total profit to a degree that satisfies the predetermined criterion. Example output formats of the proposal information include display on a monitor, storage in a storage medium, and printing on paper. The control instructor 202 generates operation commands for the nuclear power generation plant based on the parameters output by the output display 201.

(Processing Procedure)

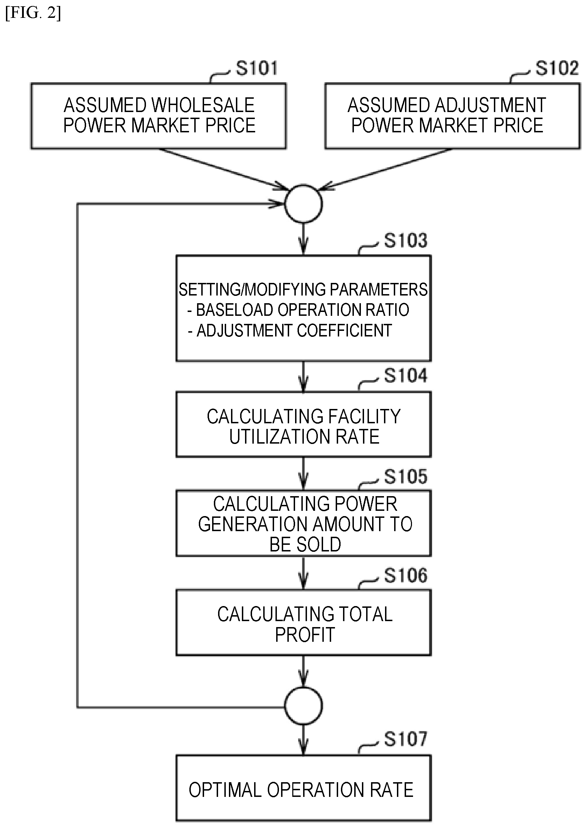

FIG. 2 is a flowchart illustrating the processing procedure of the optimal operations analysis device.

In step S101, the inputter 101 receives input from the user of the assumed future wholesale power market price (yen/kWh). Here, the assumed future wholesale power market price may be calculated using various existing methods. One example of a calculation method includes estimating based on seasonal variation, temperature, humidity, the power source ratio of renewable energy, etc.

In step S102, the inputter 101 receives input from the user of the assumed future adjustment power market price (yen/kWh). Here, the assumed future adjustment power market price may also be calculated using various existing methods. One example of a calculation method includes estimating based on past records of ΔkW prices, past records of adjustment power kWh, etc.

Note that the assumed wholesale power market price (yen/kWh) in step S101 and the assumed adjustment power market price (yen/kWh) in step S102 may be, for example, the following types of data:

- Wholesale power market prices or adjustment power market prices obtained in real time for each minimum time unit of price fluctuation (every 30 minutes)
- Wholesale power market prices or adjustment power market prices obtained from data of the same period in past single or multiple years

In step S103, the parameter setter/modifier 104 sets or modifies the baseload operation ratio and the adjustment coefficient as parameters.

For example, when baseload operation is at a constant output of 70%, and operation for adjustment power supply is 30%, the baseload operation ratio is set to the value "0.7." Each time the repeated processing passes through step S103, the parameter setter/modifier 104 changes the value of the baseload operation ratio.

As described above, due to capabilities (referred to as "adjustment capability") determined by the overall conditions including the adjustment range, speed, and other thermal constraints of the nuclear power generation plant, it is not realistic to assume that all of the capacity obtained by subtracting the first capacity for generating wholesale power from the facility capacity can be secured for generating adjustment power. In reality, only part of this capacity can be secured. Therefore, it becomes necessary to consider the adjustment coefficient. It is desirable that the adjustment coefficient be set by considering factors such as trends in the proportion of renewable energy among the power supply mix. Accordingly, the parameter setter/modifier 104 may change the adjustment coefficient each time the repeated processing passes through step S103.

In step S104, the utilization rate calculator 106 calculates the facility utilization rate using the baseload operation ratio and the adjustment coefficient set in step S103 and using Formula (1).

Facility utilization rate = Baseload operation ratio + (1 - Baseload operation ratio) × Adjustment coefficient <Formula (1)>

In step S105, the power generation amount calculator 105 calculates the power generation amount of wholesale power and the power generation amount of adjustment power using the baseload operation ratio and adjustment coefficient set in step S103 and using Formula (2). To match the units on the left-hand side and right-hand side of Formula (2), the power generation amount calculator 105 multiplies the right-hand side by the assumed operating time.
< Formula (2)>

Power generation amount of wholesale power = Facility capacity × Baseload operation ratio

Power generation amount of adjustment power = Facility capacity × (1 - Baseload operation ratio) × Adjustment coefficient

In step S106, the generated-power revenue calculator 107 calculates the revenue from selling wholesale power and the revenue from selling adjustment power based on the assumed wholesale power market price input in step S101, the assumed adjustment power market price input in step S102, and Formula (3).

< Formula (3)>

Revenue from selling wholesale power = Power generation amount of wholesale power × Assumed wholesale power market price

Revenue from selling adjustment power = Power generation amount of adjustment power × Assumed adjustment power market price

Furthermore, in step S106, the total profit calculator 109 calculates the total profit using the revenue from selling wholesale power, the revenue from selling adjustment power, the power generation cost, and Formula (4). Examples of methods for calculating the power generation cost will be described later.

Total profit = Revenue from selling wholesale power + Revenue from selling adjustment power - Power generation cost <Formula (4)>

After step S106, the processing returns to step S103. In the returned step S103, the parameter setter/modifier 104 changes the value of the baseload operation ratio and the value of the adjustment coefficient, and sets a new combination of parameters. As one example, the parameter setter/modifier 104 may set combinations of the minimum value, maximum value, and intermediate value of the baseload operation ratio and the minimum value, maximum value, and intermediate value of the adjustment coefficient. In this case, the number of loops from step S106 back to step S103 is "nine." After passing through step S106 for all parameter combinations, the processing proceeds to step S107.
In step S107, the outputter 111 displays the following information on the output device of the optimal operations analysis device 100 or transmits it to the output display 201 of the monitor/nuclear power generation plant controller 200:

- The relationship between the total profit calculated in step S106 and the parameters set in step S103 (baseload operation ratio and adjustment coefficient)
- The parameters that increase the total profit to a degree that satisfies a predetermined criterion

As an example of the relationship between total profit and parameters, the outputter 111 may output a graph in a three-dimensional space having total profit as the objective variable axis, and the baseload operation ratio and the adjustment coefficient as the explanatory variable axes.

Each time the processing passes through step S103, the parameter setter/modifier 104 may change the value of the baseload operation ratio and the value of the adjustment coefficient using an arbitrary algorithm (such as a genetic algorithm). For explanatory purposes, a parameter vector "(#n, bn)" is defined (n = 1, 2, 3, ... n). "#n" represents the value of the baseload operation ratio, and "bn" represents the value of the adjustment coefficient. The above is one example in which the parameter setter/modifier 104 sets nine parameter vectors: "(#1, b1), (#2, b2), ..., (#9, b9)."

For further explanatory purposes, an operation state vector "[(#n, bn), Rn]" is defined. "Rn" represents the total profit. Each time the processing passes through step S106, the total profit calculator 109 generates one operation state vector. The collection of these operation state vectors corresponds precisely to the aforementioned relationship between total profit and parameters. The outputter 111 can plot points representing the operation state vectors in the three-dimensional space described above and can further depict their regression curves (surfaces) as a graph. The outputter 111 may output the parameter vectors included in the operation state vectors whose "Rn" is sufficiently large to satisfy the predetermined criterion.

The present embodiment is envisioned to be applied to evaluating indicators for determining how much adjustment power should be sold in the supply-demand adjustment market next month and to controls for automating the economic operation of nuclear power generation plants. Examples of controls for automating the economic operation of nuclear power generation plants include recirculation flow control in boiling water reactors and boron concentration adjustment control in pressurized water reactors. Additionally, during output adjustment operation in heat utilization, controls of equipment outside the power generation plant may also be included. Note that the parameters in the present embodiment (the baseload operation ratio and the adjustment coefficient) may be operated at specific values that maximize total profit, or they may be operated within a bandwidth that considers output constraints in the light of the stability of the power system.

Suppose the combination of the baseload operation ratio and the adjustment coefficient that maximizes total profit has been identified. As one example, the outputter 111 may output the baseload operation ratios within the range of ±10% of the identified baseload operation ratio and the adjustment coefficients within the range of ±10% of the identified adjustment coefficient. As another example, the outputter 111 may output multiple combinations of baseload operation ratios and adjustment coefficients that allow the total profit to reach, for example, 90% or more of its maximum value. That is, the outputter 111 only needs to output combinations of the baseload operation ratio and adjustment coefficient that increase the total profit to a degree that satisfies the predetermined criterion.

(Optimal Operation Evaluation Results)

FIG. 3 is an example of optimal operation evaluation results. In FIG. 3, the wholesale power market price is assumed (fixed) to be "20 yen/kWh," the adjustment power market price is assumed (fixed) to be "49 yen/kWh," and the adjustment coefficient as a parameter is assumed (fixed) to be "0.5."

Meanwhile, the baseload operation ratio as a parameter is assumed to take the values "0.6," "0.8," and "1." FIG. 3 shows the calculated facility utilization rate, power generation cost, and total profit corresponding to each baseload operation ratio.

<In the case of the baseload operation ratio is "0.6">

The facility utilization rate is calculated using Formula (1) as follows:
"Facility utilization rate = Baseload operation ratio 0.6 + (1 - Baseload operation ratio 0.6) × Adjustment coefficient 0.5 = 0.8."

The power generation cost is defined approximately as a function of the facility utilization rate. One example of such a function is:
"Power generation cost (yen/kWh) = -8.061 × ln(facility utilization rate) + 44.58." Here, "ln(facility utilization rate)" refers to the natural logarithm of the facility utilization rate. When the facility utilization rate is "0.8," the power generation cost is calculated as "9.256483 (yen/kWh)."

Here, the power generation cost calculator 108 calculates future power generation costs through regression analysis using past records of power generation costs and facility utilization rates.

The revenue from selling wholesale power is calculated using Formulas (2) and (3) as follows:
"Facility capacity × Baseload operation ratio 0.6 × Wholesale power market price 20 (yen/kWh) = 12 (yen/kWh)." Here, for convenience, the facility capacity is assumed to be 1.

The revenue from selling adjustment power is calculated using Formulas (2) and (3) as follows:
"Facility capacity × (1 - Baseload operation ratio 0.6) × Adjustment coefficient 0.5 × Supply-demand adjustment market price 49 (yen/kWh) = 9.8 (yen/kWh)."

Therefore, the total profit is calculated using Formula (4) as:
"Revenue from selling wholesale power 12 (yen/kWh) + Revenue from selling adjustment power 9.8 (yen/kWh) - Power

generation cost 9.256483 (yen/kWh) = 12.544 (yen/kWh)."

<In the case of the baseload operation ratio is "0.8">

By performing similar calculations as above, the total profit becomes 12.593 (yen/kWh).

< In the case of the baseload operation ratio is "1">

By performing similar calculations as above, the total profit becomes 12.542 (yen/kWh).

From the above optimal operation evaluation results, it is optimal to set the baseload operation ratio to "0.8" and allocate the remaining "0.2" to adjustment power operation. Although the optimal operation evaluation results shown above are simplified for explanatory purposes, in actual practice, after fixing the baseload operation ratio to "0.8," similar calculations are performed while varying the adjustment coefficient to determine the relationship between the adjustment coefficient and total profit, allowing the plant to be operated at the point where total profit is maximized. Note that the validity of the assumed conditions such as the electricity prices and power generation costs shown in FIG. 3 has not been specifically considered.

FIG. 4 is a hardware configuration diagram of the optimal operations analysis device.

The optimal operations analysis device 100 is configured as a computer 900 having a CPU 901 (central processing unit), a RAM 902 (main storage device), a ROM 903, an HDD 904 (auxiliary storage device), a communication I/F 905, an input/output I/F 906, and a media I/F 907.

The communication I/F 905 is connected to an external communication device 915. The input/output I/F 906 is connected to an input/output device 916. The media I/F 907 reads and writes data from and to a recording medium 917. Furthermore, by executing the program (also called an application or "app") loaded into the RAM 902, the CPU 901 performs controlled execution of each processing unit. The program may also be distributed via a communication line or recorded on a recording medium 917 such as a CD-ROM for distribution.

(Effects of the Present Embodiment)

(1) The optimal operations analysis device can calculate total profit for each combination of the baseload operation ratio and the adjustment coefficient.
(2) The optimal operations analysis device can utilize current and past values as price data.
(3) The optimal operations analysis device can output the relationship among the baseload operation ratio, the adjustment coefficient, and total profit in a visually intuitive manner.
(4) The optimal operations analysis device can easily calculate the power generation amount of wholesale power and adjustment power.
(5) The optimal operations analysis device can easily calculate the facility utilization rate.
(6) The optimal operations analysis device can calculate a realistic facility utilization rate based on actual historical data.
(7) The optimal operations analysis device can set a sufficiently practical number of combinations of baseload operation ratios and adjustment coefficients.

Note that the present invention is not limited to the present embodiment, and various modifications are included. For example, the present embodiment has been explained in detail to facilitate understanding of the invention. The invention is not limited to including all the configurations described. Additionally, it is possible to include revenue determined by electrical energy-related factors (such as carbon pricing to be developed in future markets). It is also possible to replace a part of the configuration of one embodiment with a part of the configuration of another embodiment, or to add the configuration of one embodiment to another. Furthermore, it is possible to add, delete, or replace parts of the configurations in each embodiment. The above configurations, functions, processing units, processing means, etc., may be realized by hardware, for example, by designing some or all of them as integrated circuits. Alternatively, the above configurations and functions may be realized by software through a processor interpreting and executing programs that implement the respective functions. Programs, tables, files, and other information for realizing the respective functions may be stored in recording devices such as memory, hard disks, or SSDs (Solid State Drives), or in recording media such as IC cards, SD cards, or DVDs.

Explanation of Reference Numerals

1 Optimal operations analysis system
100 Optimal operations analysis device
101 Inputter
102 Price-data acquirer
103 Facility-capacity acquirer
104 Parameter setter/modifier
105 Power generation amount calculator
106 Utilization rate calculator
107 Generated-power revenue calculator
108 Power generation cost calculator
109 Total profit calculator
110 Profit storage
111 Outputter
200 Monitor/power generation plant controller (monitor/power generation plant controller)
201 Output display
202 Control instructor

## Claims

**1.** An optimal operations analysis device comprising:

a parameter setter/modifier configured to set combinations of a baseload operation ratio, which is a ratio occupied by a first capacity used for generating wholesale power within a facility capacity of a power generation plant, and an adjustment coefficient, which is a ratio occupied by a second capacity that is actually in a state capable of generating adjustment power within a capacity obtained by subtracting the first capacity from the facility capacity;
a power generation amount calculator configured to calculate the power generation amount of the wholesale power and the power generation amount of the adjustment power based on the facility capacity and the combinations;
a utilization rate calculator configured to calculate a facility utilization rate of the power generation plant based on the combinations;
a generated-power revenue calculator configured to calculate revenue from selling the wholesale power and revenue from selling the adjustment power based on price data, the power generation amount of the wholesale power, and the power generation amount of the adjustment power;
a power generation cost calculator configured to calculate the power generation cost of the power generation plant based on the facility utilization rate;
a total profit calculator configured to calculate total profit corresponding to each of the combinations based on the revenue from selling the wholesale power, the revenue from selling the adjustment power, and the power generation cost; and
an outputter configured to output the relationship between the combinations and the total profit, and the combinations that increase the total profit to a degree that satisfies a predetermined criterion.

**2.** The optimal operations analysis device according to Claim 1,
wherein the price data includes:

wholesale power market prices and adjustment power market prices obtained in real time for each minimum time unit of price fluctuation; or
wholesale power market prices and adjustment power market prices obtained from data of the same period in past single or multiple years.

**3.** The optimal operations analysis device according to Claim 1,
wherein the outputter outputs, as the relationship between the combinations and the total profit, a graph in a three-dimensional space having as axes the baseload operation ratio, the adjustment coefficient, and the total profit.

4. The optimal operations analysis device according to Claim 1,
wherein the power generation amount calculator sets,

as the power generation amount of the wholesale power, the value obtained by multiplying the baseload operation ratio by the facility capacity; and
as the power generation amount of the adjustment power, the value obtained by multiplying the facility capacity by "(1 - baseload operation ratio) × adjustment coefficient."

5. The optimal operations analysis device according to Claim 1,
wherein the utilization rate calculator sets,
as the facility utilization rate, the value obtained by adding "(1 - baseload operation ratio) × adjustment ratio" to the baseload operation ratio.

6. The optimal operations analysis device according to Claim 1,
wherein the power generation cost calculator calculates future power generation costs through regression analysis using past records of power generation costs and past records of facility utilization rates.

7. The optimal operations analysis device according to Claim 1,
wherein the parameter setter/modifier sets combinations of the minimum value, maximum value, and intermediate value of the baseload operation ratio and the minimum value, maximum value, and intermediate value of the adjustment coefficient.

8. An optimal operations analysis system comprising an optimal operations analysis device and a monitor/power generation plant controller,
wherein the optimal operations analysis device includes:

a parameter setter/modifier configured to set combinations of a baseload operation ratio, which is a ratio occupied by a first capacity used for generating wholesale power within the facility capacity of a power generation plant, and an adjustment coefficient, which is a ratio occupied by a second capacity that is actually in a state capable of generating adjustment power within the capacity obtained by subtracting the first capacity from the facility capacity;
a power generation amount calculator configured to calculate the power generation amount of the wholesale power and the power generation amount of the adjustment power based on the facility capacity and the combinations;
a utilization rate calculator configured to calculate a facility utilization rate of the power generation plant based on the combinations;
a generated-power revenue calculator configured to calculate revenue from selling the wholesale power and revenue from selling the adjustment power based on price data, the power generation amount of the wholesale power, and the power generation amount of the adjustment power;
a power generation cost calculator configured to calculate the power generation cost of the power generation plant based on the facility utilization rate;
a total profit calculator configured to calculate total profit corresponding to each of the combinations based on the revenue from selling the wholesale power, the revenue from selling the adjustment power, and the power generation cost; and
an outputter configured to output to the monitor/power generation plant controller the relationship between the combinations and the total profit, and the combinations that increase the total profit to a degree that satisfies a predetermined criterion;
and wherein the monitor/power generation plant controller operates the power generation plant under the combinations that increase the total profit to a degree that satisfies the predetermined criterion.

9. An optimal operations analysis method comprising steps of:

by a parameter setter/modifier of an optimal operations analysis device, setting combinations of a baseload operation ratio, which is a ratio occupied by a first capacity used for generating wholesale power within a facility capacity of a power generation plant, and an adjustment coefficient, which is a ratio occupied by a second capacity that is actually in a state capable of generating adjustment power within the capacity obtained by subtracting the first capacity from the facility capacity;
by a power generation amount calculator of the optimal operations analysis device, calculating the power

generation amount of the wholesale power and the power generation amount of the adjustment power based on the facility capacity and the combinations;
by a utilization rate calculator of the optimal operations analysis device, calculating the facility utilization rate of the power generation plant based on the combinations;
by a generated-power revenue calculator of the optimal operations analysis device, calculating revenue from selling the wholesale power and revenue from selling the adjustment power based on price data, the power generation amount of the wholesale power, and the power generation amount of adjustment power;
by a power generation cost calculator of the optimal operations analysis device, calculating the power generation cost of the power generation plant based on the facility utilization rate;
by a total profit calculator of the optimal operations analysis device, calculating total profit corresponding to each of the combinations based on the revenue from selling the wholesale power, the revenue from selling the adjustment power, and the power generation cost; and
by an outputter of the optimal operations analysis device, outputting the relationship between the combinations and the total profit, and the combinations that increase the total profit to a degree that satisfies a predetermined criterion.

[FIG. 1]

1
100
OPTIMAL OPERATIONS ANALYSIS DEVICE
101
INPUTTER
102
PRICE-DATA ACQUIRER
103
FACILITY-CAPACITY ACQUIRER
104
PARAMETER SETTER/MODIFIER
105
POWER GENERATION AMOUNT CALCULATOR
106
UTILIZATION RATE CALCULATOR
107
GENERATED-POWER REVENUE CALCULATOR
108
POWER GENERATION COST CALCULATOR
109
TOTAL PROFIT CALCULATOR
110
PROFIT STORAGE
111
OUTPUTTER
200
MONITOR/NUCLEAR POWER GENERATION PLANT CONTROLLER
201
OUTPUT DISPLAY
202
CONTROL INSTRUCTOR

[FIG. 2]

S101
ASSUMED WHOLESALE POWER MARKET PRICE
S102
ASSUMED ADJUSTMENT POWER MARKET PRICE
S103
SETTING/MODIFYING PARAMETERS
- BASELOAD OPERATION RATIO
- ADJUSTMENT COEFFICIENT
S104
CALCULATING FACILITY UTILIZATION RATE
S105
CALCULATING POWER GENERATION AMOUNT TO BE SOLD
S106
CALCULATING TOTAL PROFIT
S107
OPTIMAL OPERATION RATE

[FIG. 3]

| BASELOAD OPERATION RATIO | 0.6 | 0.8 | 1 |
|---|---|---|---|
| FACILITY UTILIZATION RATE | 0.8 (=BASELOAD OPERATION RATIO 0.6 + (1-0.6) x ADJUSTMENT COEFFICIENT 0.5) | 0.9 (=BASELOAD OPERATION RATIO 0.8 + (1-0.8) x ADJUSTMENT COEFFICIENT 0.5) | 1 (=BASELOAD OPERATION RATIO 1 + (1-1) x ADJUSTMENT COEFFICIENT 0.5) |
| POWER GENERATION COST | 9.256483 yen | 8.307034 yen | 7.457723 yen |
| TOTAL PROFIT (BASELOAD POWER SELLING PART + ADJUSTMENT POWER SELLING PART – POWER GENERATION COST) | 12.544 yen | 12.593 yen | 12.542 yen |

[FIG. 4]

900
901
CPU
902
RAM
903
ROM
904
HDD
COMMUNICATION I/F
905
INPUT/OUTPUT I/F
906
MEDIUM I/F
907
915
COMMUNICATION DEVICE
916
INPUT/OUTPUT DEVICE
917
RECORDING MEDIUM

**INTERNATIONAL SEARCH REPORT**

International application No. **PCT/JP2023/036170**

**A. CLASSIFICATION OF SUBJECT MATTER**

***G06Q 50/06***(2024.01)i; ***G06Q 10/00***(2023.01)i
FI: G06Q50/06; G06Q10/00

According to International Patent Classification (IPC) or to both national classification and IPC

**B. FIELDS SEARCHED**

Minimum documentation searched (classification system followed by classification symbols)

G06Q50/06; G06Q10/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-20829 A (KABUSHIKI KAISHA TOSHIBA) 20 January 2005 (2005-01-20) entire text, all drawings | 1-9 |
| A | JP 2017-68408 A (MITSUBISHI HITACHI POWER SYSTEMS, LTD.) 06 April 2017 (2017-04-06) entire text, all drawings | 1-9 |
| A | JP 2007-40613 A (NATIONAL INSTITUTE OF ADVANCED INDUSTRIAL SCIENCE AND TECHNOLOGY) 15 February 2007 (2007-02-15) entire text, all drawings | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/036170**

| Patent document cited in search report | Publication date (day/month/year) | Patent family member(s) | Publication date (day/month/year) |
|---|---|---|---|
| JP 2005-20829 A | 20 January 2005 | (Family: none) | |
| JP 2017-68408 A | 06 April 2017 | US 2018/0275641 A1<br>entire text, all drawings<br>CN 108027947 A<br>KR 10-2018-0043829 A | |
| JP 2007-40613 A | 15 February 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022171573 A